# EUROPEAN PATENT SPECIFICATION

(11) **EP 1 176 881 B1**
(45) Date of publication and mention of the grant of the patent: **22.09.2004**
(21) Application number: 00914156.5
(22) Date of filing: 21.03.2000
(51) Int. Cl.: A23L 1/40, A23L 1/325, A23L 1/314, A23L 1/31, A23L 1/176, A23L 1/318

(54) **MULTICOMPONENT MARINADES**
MEHRKOMPONENTMARINADEN
MARINADES A COMPOSANTES MULTIPLES

(30) Priority: 29.04.1999 US 301314; 03.06.1999 US 324663
(43) Date of publication of application: 06.02.2002
(73) Proprietor: SOCIETE DES PRODUITS NESTLE S.A., 1800 Vevey (CH)
(72) Inventor: PRASAD, Nikhil, New Milford, CT 06776 (US); VADEHRA, Dharam, Vir, New Milford, CT 06776 (US); KIM, Hyung, Wook, Irvington, NY 10533 (US); LOIZEAU, Gérard, New Milford, CT 06776 (US)
(74) Representative: Thomas, Alain
(86) International application number: PCT/EP2000/002495
(87) International publication number: WO 2000/065937

(56) References cited:
- GB-A- 977 238
- US-A- 3 586 512
- US-A- 4 139 649
- US-A- 4 140 809
- US-A- 4 165 391

## Description

### Technical field

The present invention relates to a marinade for fish and meat products and to a process for flavoring the fish or meat products with the marinade.

### Background Art

Food products such as chicken, meats, and fish are often marinated before they are cooked. Marinades are known that add flavor to food products, that prevent the food products from losing moisture during cooking, or that effect the appearance of the cooked product.

Food products such as chicken, meat, and fish may be treated with a marinade before being cooked to minimize moisture loss during cooking, thus providing a juicier cooked product. European Patent 576,276 discloses a food coating to retain fluids in meat during cooking or storage. The coating consists of albumen, milk protein, starch and water. The food coating may also contain edible oil, salt, and unmodified starch. The coated food is heated to partially coagulate the albumen, denature the milk protein, and gelatinise the starch. The heat treated cooked food is then combined with sauces, retorted or vacuum packed, and heated to microbiological stability. The coating enhances fluid retention in the food during its preparation for immediate or subsequent consumption and during storage.

European Patent 643,923 discloses a coating for fish or meat that is a dry particulate mixture of 5-50 weight percent heat set protein and 95-50 weight percent unmodified starch. The ratio of protein to starch is 2-6:10. The protein is egg white protein or albumen and the starch is potato starch. After coating, the meat or fish is cooked, heated to an appropriate internal core temperature, and chilled or deep frozen. The coating enhances moisture retention during food preparation and storage.

It is also known to coat foods in order to impart a certain appearance to the cooked food product, such as a browned appearance. U.S. Patent No. 4,640,837 discloses a coating composition for imparting a crisp golden brown surface to foodstuffs cooked in a microwave. The coating includes a blend of bread crumbs and oil, dextrin, pre-gelatanized starch, and soy protein concentrate.

Similarly, Australian Patent 96-70,458 discloses a coating mix composition which when coated onto moistened vegetables imparts a crisp golden brown texture with the taste, texture, and appearance of a fried food coating when the vegetables are baked. The product is neither oily or soggy. The composition includes bread crumbs, partially hydrogenated vegetable oil, modified starch, powdered shortening, carbohydrate adhesive, protein, vegetable lecithin, and seasonings.

US-A-3,586,512 discloses an edible food coating to be applied to fish and meat, which produce a fried food colour, appearance, taste and odour when these foodstuffs are baked in an oven.

GB-A-977,238 discloses processes for the preparation of synthetic ground or chopped meat products from protein filaments or fibres.

Marinades that add flavor to food products are also known. A variety of marinades are commercially available to consumers which impart a variety of flavors to chicken, meats, and fish. These marinades typically require that an acidulant like vinegar, wine, or yogurt and oil be added before marinating. Moreover, it is necessary to marinate the food product for several hours or longer before cooking the food.

Currently there is no single marinade that can simultaneously add flavor, retain moisture, and brown the food in a single product. Thus, there remains a need for a marinade of this type so that flavor can be enhanced while the texture and color of the food product after cooking can be maintained. Furthermore, it would be desirable to have a marinade that does not require additional ingredients such as oil, vinegar, wine, or yogurt and does not require that the food product be marinated for a long period of time before cooking. Ideally, the marinade would be a solid powder that could be coated on the food or a liquid that could be sprayed or brushed on the food and would not require the food to be held for a long time prior to cooking. The present invention resolves this need.

### Summary of the Invention

The present invention provides a multi-functional marinade for fish or meat products as defined in claim 1. The multi-functional marinade includes three components. The first component is at least one flavoring agent in an amount sufficient to impart a _{'} flavor to the cooked product. The second component is a browning agent in an amount sufficient to impart a brown color to the cooked product. The browning agent includes a chromogen, a filler, and an enzyme modified ingredient. The enzyme modified ingredient is preferably a mixture of a carbonate and a dairy source that has been treated with a lactase, a protease, and then spray dried. The third component is partially hydrogenated fat in an amount sufficient to improve the mouthfeel of the cooked product.

The multi-functional marinade may also include a fourth component. The fourth component is a texture improvement agent in an amount sufficient to reduce moisture loss during cooking of the fish or meat product. The texture improvement agent typically includes a starch such as an oxidized starch or unmodified starch, and a protein, such as egg white powder, soy protein or whey protein.

Generally, the multi-functional marinade may be in the form of a dry powder, or in a liquid form: The liquid form may be a water-in-oil or oil-in-water emulsion prepared by mixing the dry powder with oil and water.

The invention also relates to processes as claimed in claims 16 and 18 for flavoring a fish or meat product by contacting the fish or meat product with the multi-functional marinade and then cooking the product to obtain an enhancement in flavor, texture, or color. The chicken or meat is cooked to a core temperature of between 63°C to 82°C (145° to 180°F). The method of cooking is at least one selected from the group consisting of grilling, steam cooking, oven cooking in conduction ovens, oven cooking in convection ovens, deep-frying, pan frying, and microwave cooking.

### Detailed Description of Preferred Embodiments

The present invention relates to a multi-component marinade for a fish or meat product that can be conveniently applied. The term "fish or meat product" means any edible product that contains any fish or meat as the primary components. "Meat" includes chicken, beef, pork, lamb, turkey, or others whether used alone or in combination in a food product that is to be cooked before eating. The marinade enhances at least one of flavor, texture, or color of the final product.

The marinade may be used as a dry blend, or may be suspended in an emulsion to give a liquid multi-component marinade. The liquid marinade is a water-in-oil or an oil-in-water emulsion. The marinade flavors the fish or meat, retains moisture in the fish or meat, and browns the fish or meat when it is cooked. The marinade can be used with any method of cooking including, but not limited to, grilling, steam cooking, oven cooking, deep-frying, pan frying, microwave cooking, and cooking in a COMBI-OVEN™ (commercially available from Altosham Inc. of Menomonee Falls, WI). The marinade includes three components: a flavor component, a browning agent, and partially hydrogenated fat. The marinade may optionally include a fourth component which is a texture improvement agent.

The flavoring agent is present in an amount of 10-60 percent by weight of the marinade. Preferably, the flavoring agent is present in an amount of 20-50 percent by weight of the marinade and more preferably in an amount of 35-45 percent by weight of the marinade.

The browning agent is present in an amount of 1-15 percent by weight of the marinade, preferably 2-8 percent by weight of the marinade, and more preferably 3-5 percent by weight of the marinade.

The partially hydrogenated fat is present in an amount of 10-60 percent by weight of the marinade, preferably 15-35 percent by weight of the marinade, and more preferably 18-22 percent by weight of the marinade.

The texture improvement agent, if present, is present in an amount of 30-60 percent by weight of the marinade, preferably 32-38 percent by weight of the marinade.

The flavoring agent can be any blend of ingredients which are generally used in the food industry to flavor fish and/or meats. The flavoring agent is in a powdered form so that it can easily be mixed into the dry form of the marinade or into the emulsion. By flavoring agent is meant any ingredient which imparts flavor or taste to a food product.

Flavoring agents useful in the invention include seasonings, herbs, spices, salt, pepper, onion powder, garlic powder, other savory powders, oleoresins, and commercially available flavorings. Examples of commercially available flavorings include barbecue, southwestern, mesquite, cajun, garlic and herb, and teriyaki.

The browning agent is present to impart a desirable appearance to the cooked food. Preferably the browning agent imparts a roasted brown appearance to the cooked fish or meat. The browning agent of the present invention includes chromogens, a filler, and an enzyme modified protein.

Chromogens are ingredients which naturally impart color to a food product. Chromogens, useful with the present invention include caramel color, annatto natural color, tumeric, paprika, tea leaves, and the like. Generally the chromogens are present in an amount of 1-60 percent by weight of the browning agent, preferably 2-40 percent and more preferably 10-20 percent.

Preferred chromogens are caramel color, for example, CARAMEL COLOR BC420 (commercially available from Sethness Products Co. of Chicago, IL); annatto natural color, for example, ANNATTO TYPE WJ810 ( commercially available from Warner Jenkinson Cosmetic Co. of South Plainfield, NJ); and tumeric, for example, TUMERIC TYPE 30 (commercially available from Kalsec Inc. of Kalamazoo, MI). The caramel color when used is present in an amount of 10-40 percent by weight of the browning agent, preferably 12-30 percent by weight of the browning agent, and more preferably 15-22 percent by weight of the browning agent. Annatto natural color when used is present in an amount of 0.5-4 percent by weight of the browning agent, preferably 1-3 percent by weight of the browning agent, and more preferably 1.5-2.5 percent by weight of the browning agent. Tumeric when used is present in an amount of 0-2 percent by weight of the browning agent, preferably 0.5-1.5 percent by weight of the browning agent, and more preferably 0.75-1.25 percent by weight of the browning agent.

The filler can be any filler. By filler is meant any inert material. Preferably the filler is a maltodextrin having a dextrose equivalent (DE) of between 5 and 40. the filler is present in an amount of 1-80 percent by weight of the browning agent, preferably 30-70 percent by weight of the browning agent, and more preferably, 60-70 percent by weight of the browning agent. Other fillers which may be used in the browning agent include unmodified starch and sweet whey.

The enzyme modified protein of the browning agent is an enzyme modified dairy source combined with a carbonate compound such as sodium bicarbonate (NaHCO₃). The enzyme modified dairy source is obtained by treating one or more dairy sources with a lactase and a protease. The dairy source can be any raw material derived from milk that is high in lactose. By high in lactose is meant a product having at least 10 percent lactose. The dairy source includes milk, cheese, casein, whey, and non-fat dry milk. In addition, wheat gluten hydrolysate may be used in place of the dairy source. Preferably the dairy source is non-fat dry milk or whey protein isolate, such as LACPRODAN 80 (commercially available from MD Foods Ingredients of Union, NJ). Any lactase can be used, a suitable lactase, for example, is LACTOZYME™ (commercially available from Novo Nordisk Biochem North America of Franklintori, NC). Any protease may be used, a suitable protease, for example, is FLAVOURZYME™ (commercially available from Novo Nordisk Biochem North America of Franklinton, NC).

The enzyme modified ingredient is generally prepared by treating the dairy source dissolved in water at a concentration of about 30 percent w/v with 0.01 to 2 percent w/v of the lactase, preferably 0.25-1 percent w/v of the lactase, at a temperature of about 45°C, for about 2 hours. Following enzymatic hydrolysis with a lactase the solution of the dairy source is then treated with a protease in an amount of about 0.05 percent w/v, at a temperature of about 40-45°C, for about 6 hours. The resulting solution is then spray dried to produce a dry powder of the enzyme modified dairy source. A carbonate such as sodium bicarbonate is added to the spray dried enzyme modified dairy source in an amount of 2-20 percent by weight of the spray dried enzyme modified dairy source, preferably 10 percent by weight of the spray dried enzyme modified dairy source to give the enzyme modified ingredient. Browning of the fish or meat is enhanced when the enzyme modified ingredient is under alkaline conditions. The carbonate is added to provide the necessary alkaline conditions.

Without wishing to be bound by theory it is believed that the enzymes generate reducing sugars and amino acids as browning precursors. The lactase hydrolyzes lactose to form glucose and galactose and the protease hydrolyzes proteins in the dairy source to produce amino acids. When heated the amino acids react with the glucose or galactose to produce compounds which cause browning of the fish or meat.

The enzyme modified ingredient is present in an amount of 40-80 percent by weight of the browning mixture, preferably 50-75 percent, by weight of the browning mixture and more preferably 60-70 percent by weight of the browning mixture.

The preferred browning agent for oven cooking, deep frying, or pan frying is 70-80 percent maltodextrin, 20-40 percent caramel color, 1-3 percent annatto, and 1-2 percent turmeric.

The preferred browning agent for microwave cooking is 50-75 percent enzyme modified ingredient, 20-40 percent caramel color, and 1-3 percent annatto.

The partially hydrogenated fat is added to the marinade to give a better mouthfeel to the cooked fish or meat product. Any partially hydrogenated fat that is a solid at room temperature can be used. Thus, the partially hydrogenated fat should have a solid fat index of greater than 65 percent, and preferably greater than about 80 percent. Partially hydrogenated fats include, for example, soy bean oil, cottonseed oil and palm fat. The preferred partially hydrogenated fat is soy bean oil.

The texture improvement agent, when present in the marinade, is present to improve moisture retention of the fish or meat when it is cooked. The texture improvement agent leads to a more moist and juicy cooked product. The texture improvement agent includes at least one of an oxidized starch, such as BATTERCRISP 05330 (commercially available from Crestar Food Products Inc. of Richfield, OH) or a unmodified corn starch, such as MELOGEL (commercially available from National Starch and Chemical of Hawthorne, NJ) and at least one of egg white powder or whey protein isolate. Optionally, the texture improvement agent may also include soy, protein, salt, and gelatin.

The oxidized starch or unmodified starch is present in an amount of 20-80 percent by weight of the texture improvement agent, preferably 40-70 percent by weight of the texture improvement agent, and more preferably about 55-65 percent by weight of the texture improvement agent. The egg white powder is present in an amount of up to 30 percent by weight of the texture improvement agent, preferably, 10-25 percent by weight of the texture improvement agent, and more preferably 12-18 percent by weight of the texture improvement agent. Whey protein isolate such as LACPRODAN 80 (commercially available from MD Foods Ingredients of Union, NJ) is present in an amount of up to 25 percent by weight of the texture improvement agent, preferably 5-20 percent, and more preferably 8-12 percent by weight of the texture improvement agent.

Soy protein isolate, such as SUPRO 660 (commercially available from Protein Technologies International, Inc. of Saint Louis, MO), may optionally be included in the texture improvement agent. Soy protein isolate is added to enhance the moisture retention or act as a replacement for the egg white powder in the formula. Soy protein isolate, when included in the texture improvement agent, is present in an amount of from 0-25 percent by weight of the texture improvement agent, preferably from 8-25 percent by weight of the texture improvement agent, and more preferably from 11-15 percent by weight of the texture improvement agent.

Salt is optionally present in the texture improvement agent. Salt is added to enhance flavor especially when the texture improvement agent is used by itself. When present salt is included in an amount from 0-20 percent by weight of the texture improvement agent, preferably from 4-16 percent by weight of the texture improvement agent, and more preferably from 6-10 percent by weight of the texture improvement agent.

Gelatin may also be optionally included in the texture improvement agent. Gelatin is added to improve the crunchiness and crispness of the coating and thus is preferred in deep frying applications. When present gelatin is included in an amount of up to about 0-40 percent by weight of the texture improvement agent.

The amount of each component of the texture improvement agent can be varied so as to maximize performance in specific ovens. For example, a texture improvement agent having 70-80 percent oxidized starch is preferable for chicken or meat that will be steam cooked. For a chicken or meat that is cooked in an oven 70-80 percent unmodified corn starch is preferable and for deep fat frying a texture improvement agent having 40-60 percent gelatin is preferable.

The preferred texture improvement agent for oven cooking includes 60-70 percent unmodified starch, 12-18 percent egg white or soy protein, 10-15 percent whey protein isolate, and 5-10 percent salt.

The preferred texture improvement agent for deep fat frying includes, 30-50 percent gelatin, 20-30 percent oxidized starch, and 0-15 percent egg white or soy protein or whey.

The preferred texture improvement for steam or high moisture cooking agent includes 65-75 percent oxidized starch, 12-18 percent egg white or soy protein, 10-15 percent whey protein isolate and 5-10 percent salt.

The texture improvement agent generally gives an improved percent yield after cooking of greater than 5 percent, preferably greater than 10 percent compared to an unmarinated food product. By percent yield after cooking is meant the weight of a piece of fish or meat after cooking compared to the weight before cooking. A higher percent yield indicates less weight loss during cooking. The reduction in weight for marinated fish and meat products is attributed to less moisture being lost during cooking. Without wishing to be bound by theory it is believed that the texture improvement agent prevents moisture loss in two ways. It is believed that heating denatures the egg white powder and/or whey protein and gelatanizes the starch to create a physical barrier to moisture loss. In addition, the starch acts as a water binder to inhibit the escape of moisture from the product.

The flavor component, browning agent, partially hydrogenated fat, and texture improvement agent, if present, are mixed and dry blended to make the marinade in powdered form. A ribbon blender or any similar machine can be used to blend the ingredients of the marinade. These machines are well known in the art and need not be described in further detail here.

A liquid marinade can also be prepared by suspending the powdered marinade in an oil-in-water or a water-in-oil emulsion. The liquid marinade can be prepared by heating vegetable oil, a partially hydrogenated oil, such as cottonseed oil, and an emulsifier, such as DIMODAN™ (commercially available from Danisco of Kansas City, KS) to about 60°C or until a clear solution forms and then cooling the solution to about 40°C. To the resulting mixture of oils is added water which may optionally contain coloring. The oil and water mixture is then mixed and homogenized at a high shear rate to form a stable emulsion. Methods for homogenizing oil and water mixtures are well known in the art and need not be described here. To the resulting emulsion is added the powdered multi-component marinade that may have plated oleoresin. The powdered multi-component marinade and the emulsion and are then mixed to form a suspension.

The ratio of oil to water determines what type of emulsion is formed. For an oil-in-water emulsion a higher amount of water is used and for a water-in-oil emulsion a higher amount of oil is used. For a liquid marinade the amount of water in the liquid marinade is 5-80 percent by weight of the liquid marinade. For water-in-oil emulsions the amount of water in the liquid marinade is preferably 10-20 percent by weight of the liquid marinade and more preferably 12-18 percent by weight of the liquid marinade.

The amount of vegetable oil, such as soybean oil, in the liquid marinade is 5-75 percent by weight of the liquid marinade. For oil-in-water emulsions the amount of oil in the liquid marinade is preferably 35-65 percent by weight of the liquid marinade, and more preferably 45-55 percent by weight liquid marinade.

The amount of hydrogenated oil in the liquid marinade is 1-10 percent by weight of the liquid marinade, preferably 2-8 percent by weight of the liquid marinade, and more preferably 3-5 percent by weight of the liquid marinade.

The amount of emulsifier in the liquid marinade is 2-10 percent by weight of the liquid marinade, preferably 3-8 percent by weight of the liquid marinade, and more preferably about 5-6 percent by weight of the liquid marinade. The type of emulsifier used is dependent on the type of emulsion required. The art of selecting emulsifiers and forming stable emulsions is well documented and need not be described here.

The amount of powdered multi-functional marinade in the liquid marinade is 10-40 percent by weight of the liquid marinade, preferably 15-30 percent by weight of the liquid marinade, and more preferably 20-26 percent by weight of the liquid marinade.

The marinades of the invention are applied to the fish or meat product before it is cooked. The fish or meat can be fresh, frozen, or frozen and thawed. Preferably, the meat is fresh or frozen and thawed. The dry marinade is applied to the fish or meat by dredging the fish or meat in the marinade. Preferably the fish or meat is patted dry before being dredged. The powdered marinade is coated on the fish or meat at a level of at least 4 percent by weight of the fish or meat, preferably at 6-8 percent by weight of the fish or meat. The oil emulsion marinade is sprayed or brushed on the fish or meat. The liquid marinade is coated on the fish or meat at a level of at least 6 percent by weight of the fish or meat, preferably at 10-12 percent by weight of the chicken or meat. Preferably, the fish or meat is coated on all sides. The fish or meat coated with marinade is then cooked for an appropriate amount of time so that the fish or meat reaches a core temperature of 63°C to 82°C (145° to 180°F), preferably 71°C (160°F). By core temperature is meant the temperature of the fish or meat at the middle of its thickest point. Cooking can be accomplished by any means including, but not limited to grilling, steam cooking, oven cooking in conduction and convection ovens, deep-frying, pan frying, microwave cooking, and cooking in a COMBI-OVEN™ (a combination of steam and heat convection). The resulting cooked product has a golden brown color and a roasted appearance. In addition, the flavoring component adds additional flavor to the fish or meat. Furthermore, if the texture improvement agent is present in the marinade the marinated fish or meat is more moist and juicy than the non-marinated fish or meat. Moreover, samples that are cooked and cooled to room temperature and then reheated in a microwave show minimal change. Similarly, cooked fish or meat that is been kept warm in a COMBI-OVEN™ for 2 hours at 160°F retains its good texture and appearance.

### Examples

The invention is further defined by reference to the following examples described below. In these examples percentages are given as weight percents unless otherwise indicated.

### Example 1. Southwestern Marinade

A dry multi-functional food marinade according to the invention was prepared according to the following procedure:
1. Sub-recipes of each component were batched up in a ribbon blender. The sub-recipes are provided in Tables 1-3.
2. The sub recipes were then used to form the final dry blend (Table 4).

**Table 1.**

| **Southwest Flavor Blend** | |
|---|---|
| **Ingredient** | **Amount** |
| Salt | 21.83% |
| TOMATO POWDER 404^{a} | 23.08% |
| Chili Powder^{a} | 13.03% |
| Yeast Extract Powder^{a} | 10.87% |
| Chicken Flavor Powder^{a} | 9.06% |
| Cilantro Powder^{a} | 9.03% |
| Onion Powder (DURAROME®)^{a} | 5.03% |
| Sugar Granulated^{a} | 3.03% |
| Garlic Flavor(DURAROME®)^{a} | 1.83% |
| Black Pepper (MCCORMICK 773442)^{a} | 1.71% |
| Citric Acid Powder^{a} | 1.50% |

| | |
|---|---|
| ^{a} TOMATO POWDER 404 is commercially available from Spreda U.S.A., Inc. of Louisville, KY; Chili Powder and Black Pepper are commercially available from McCormick and Co., Inc. of Hunt Valley, MD; Yeast Extract Powder is commercially available from food Ingredients Specialty, Inc. of Solon, OH; Chicken Flavor Powder is commercially available from International Flavor and Fragrances of New York, NY; Cilantro Powder is commercially available from Basic Vegetable Products LP of Modesto, CA; DURAROME® Onion Powder and Garlic Flavor are commercially available from Firmenich of Newark, NJ; Granulated Sugar is commercially available from Domino Sugar of Baltimore, MD, Citric Acid Powder is commercially available from ADM Food Additives Division, Decatur, IL. | |

**Table 2.**

| **Browning Agent** | |
|---|---|
| **Ingredient** | **Amount** |
| Enzyme modified dairy Ingredient | 61.40% |
| Sodium bicarbonate | 13.50% |
| CARAMEL COLOR BC420^{a} | 24.10% |
| ANNATTO TYPE WJ 810^{a} | 1.00% |

| | |
|---|---|
| ^{a} CARAMEL COLOR BC420 is commercially available from Sethness Products Co. of Chicago, IL; ANNATTO TYPE WJ 810 is commercially available from Warner Jenkinson Cosmetic Co. of South Plainfield, NJ. | |

**Table 3.**

| **Texture Improvement Agent** | |
|---|---|
| **Ingredient** | **Amount** |
| Starch (BATTERCRISP 05330)^{a} | 25.76% |
| Gelatin | 41.02% |
| SUPRO 660^{a} | 12.57% |
| Egg White Powder^{a} | 12.44% |
| Whey Protein Isolate (LACPRODAN 80)^{a} | 8.21% |

| | |
|---|---|
| ^{a} BATTERCRISP 05330 is commercially available from Crestar Food products, Inc. of Richfield, OH; SUPRO 660 is commercially available from Protein Technologies International, Inc. of Saint Louis, MO; Egg White Powder is commercially available from Henningsenn Foods, Inc. of David City, NE; LACPRODAN 80 is commercially available from MD Foods Ingredients of Union, NJ. | |

**Table 4.**

| **Multi-component General Formula** | |
|---|---|
| **Ingredient** | **Amount** |
| Southwest Flavor Sub-recipe | 22.20% |
| Browning Agent sub-recipe | 5.49% |
| Texture Improvement Agent Sub-recipe | 44.22% |
| Partially Hydrogenated Soybean Oil | 28.09% |

### Example 2

A liquid multi-functional food marinade according to the invention was prepared according to the following procedure:
1. Vegetable oil, DIMODAN™(commercially available from Danisco of Kansas City, KS) and partially hydrogenated oil was heated to 60°C or until the solution turned clear. The solution was then cooled to 40°C.
2. Water was added to the mixture of oils and the resulting mixture homogenized with a POLYTRON^{TM} (commercially available from KINEMATIC GmbH of Switzerland) to form a stable emulsion.
3. Oleoresin and color were plated on the dry blend of the marinade.
4. The dry blend of the marinade was then added to the emulsion and the emulsion mixed to from a suspension.

**Table 5**

| **Composition of Liquid Multi-functional Marinade.** | |
|---|---|
| Ingredients | **Amount** |
| **DRY MIX** | |
| Salt | 4.23% |
| Natural Flavors | 5.00% |
| Yeast Extract Powder | 2.44% |
| Spices | 7.00% |
| Ribotides | 2.03% |
| TOMATO POWDER 404 | 1.35% |
| Starch Modified | 1.29% |

| **WATER MIX** | |
|---|---|
| Water | 16.00% |
| Natural Colors | 0.40% |

| **OIL MIX** | |
|---|---|
| Vegetable oil | 49.26% |
| Partially hydrogenated Cottonseed oil. | 4.00% |
| Emulsifier DIMODAN™ | 6.00% |
| Oleoresin^{a} | 1.00% |
| **TOTAL** | 100.00% |

| | |
|---|---|
| ^{a} Oleoresins are commercially available from Kalsec Inc. of Kalamazoo, MI and McCormick and Co., Inc. of Hunt Valley, MD. | |

In both examples, the chicken marinated with the multi-functional marinade was cooked in a COMBI-OVEN™ at 165.6°C (330°F) for 3 minutes with steam followed by 6-9 minutes cooking with dry heat. The yield of the cooked chicken was between 82-94 percent. The cooked chicken had a golden brown color.

## Claims

1. A multi-functional marinade comprising:
at least one flavoring agent in an amount sufficient to impart a flavor to a cooked fish or meat product that is contained in the marinade;
a browning agent in an amount sufficient to impart a brown color to a cooked fish or meat product that is contained in the marinade, comprising a chromogen, a filler, and an enzyme modified ingredient; and
a partially hydrogenated fat in an amount sufficient to improve the mouthfeel of a cooked fish or meat product that is contained in the marinade;
**characterised in that** the chromogen is at least one chromogen selected from the group consisting of caramel color, annatto color, paprika, tumeric, and tea leaves; and the enzyme modified ingredient is a mixture of a carbonate and a dairy source that has been treated with a lactase and a protease and spray dried.

2. The multi-functional marinade of claim 1 wherein the flavoring agent is present in an amount of 20-50 percent by weight of the marinade, the browning agent is present in an amount of 1-15 percent by weight of the marinade, the partially hydrogenated fat is present in an amount of 10-60 percent by weight of the marinade.

3. The multi-functional marinade of claim 1 wherein the flavoring agent is selected from the group consisting of seasonings, herbs, spices, salt, pepper, onion powder, garlic powder, savory powders, and commercially available flavorings.

4. The multi-functional marinade of claim 1 the filler is maltodextrin.

5. The marinade of claim 1, wherein the chromogen is present in the browning agent in an amount of 1-60 percent by weight, the filler is present in the browning agent in an amount of 1-80 percent by weight, and the enzyme modified ingredient is present in the browning agent in an amount of 40-80 percent by weight, and the carbonate is present in an amount of 2-20 percent by weight of the spray dried enzyme modified dairy source.

6. The multi-functional marinade of claim 1 wherein the carbonate is a bicarbonate or an alkali metal hydrogen carbonate, and the dairy source is at least one selected from the group consisting of non-fat dry milk and sweet whey.

7. The multi-functional marinade of claim 1 wherein the partially hydrogenated fat has a solid fat index of greater than 65 percent and is selected from the group of soybean oil, cotton seed oil, and palm fat.

8. The multi-functional marinade of claim 1 in the form of a dry powder.

9. A multi-functional marinade of claim 1 in liquid form, wherein the liquid is oil or water.

10. The multi-functional marinade of claim 9 wherein the liquid form is an oil-in-water or water-in-oil emulsion, wherein the emulsion comprises water, vegetable oil, partially hydrogenated oil, emulsifier, and oleoresin.

11. The multi-functional marinade of claim 10 wherein the water is present in an amount of 5-75 percent by weight, the vegetable oil is present in an amount of 25-75 percent by weight, the partially hydrogenated cottonseed oil is present in an amount of 1-10 percent by weight, and the emulsifier is present in an amount of 2-10 percent by weight.

12. The multi-functional marinade of claim 1 further comprising a texture improvement agent in an amount sufficient to reduce moisture loss during cooking of a fish or meat product that contains the marinade comprising at least one starch selected from the group of oxidized starch and unmodified starch, and at least one protein selected from the group of egg white powder, soy protein and whey protein.

13. The multi-functional marinade of claim 12 wherein the flavoring agent is present in an amount of 20-50 percent by weight of the marinade, the browning agent is present in an amount of 1-15 percent by weight of the marinade, the partially hydrogenated fat is present in an amount of 10-60 percent by weight of the marinade, and the texture improvement agent is present in an amount of 30-60 percent by weight of the marinade.

14. The multi-functional marinade of claim 12 wherein the oxidized or unmodified starch of the texture improvement agent is present in an amount of 20 to 80 percent by weight of the texture improvement agent, the egg white powder of the texture improvement agent is present in an amount of up to 30 percent by weight of the texture improvement agent, or the whey protein of the texture improvement agent is present in an amount of up to 25 percent by weight of the texture improvement agent.

15. The multi-functional marinade of claim 14 wherein the texture improvement agent further comprises soy protein, salt, or gelatin; with the soy protein being present in an amount of up to 20 percent by weight of the texture improvement agent, the salt being present in an amount of up to 20 percent by weight of the texture improvement agent, and the gelatin being present in an amount of up to 40 percent by weight of the texture improvement agent.

16. A process for flavoring a fish or meat product comprising:
contacting the fish or meat product with the multi-functional marinade of claim 1; and
cooking the product to enhance at least one of flavoring, texture, or color of the cooked product.

17. The process of claim 16 wherein the fish or meat product is cooked to a core temperature of between 63°C to 82°C (145°. to 180°F) by grilling, steam cooking, oven cooking in conduction or convection ovens, deep-frying, pan frying, or microwave cooking of the product.

18. A process for flavoring a fish or meat product comprising:
contacting the fish or meat product with the multi-functional marinade of claim 9; and
cooking the fish or meat product to enhance at least one of flavor, texture, or color of the cooked product.

19. The process of claim 18 wherein the fish or meat product is cooked to a core temperature of between 63°C to 82°C (145° to 180°F) by grilling, steam cooking, oven cooking in conduction or convection ovens, deep-frying, pan frying, or microwave cooking of the product.

## Patentansprüche

1. Multifunktionelle Marinade umfassend:
mindestens ein aromatisches Mittel in ausreichender Menge, um einem gekochten, in der Marinade vorliegenden Fisch- oder Fleischprodukt ein Aroma zu verleihen,
ein bräunendes Mittel in ausreichender Menge, um einem gekochten, in der Marinade vorliegenden Fisch- oder Fleischprodukt eine braune Färbung zu verleihen, welches ein Chromogen, einen Füllstoff und einen enzymmodifizierten Inhaltsstoff umfasst; und
ein teilweise hydriertes Fett in ausreichender Menge, um den Geschmack eines gekochten, in der Marinade vorliegenden Fisch- oder Fleischprodukt zu verbessern;
**dadurch gekennzeichnet, dass** das Chromogen mindestens ein Chromogen ist, ausgewählt aus der Gruppe bestehend aus Karamell-Farbstoff, Annatto-Farbstoff, Paprika, Gelbwurz und Teeblättern; und
dass der Enzym-modifizierte Inhaltsstoff ein Gemisch aus Carbonat und einer Milchprodukt-Quelle ist, wobei die Milchprodukt-Quelle mit einer Lactase und Protease behandelt und sprühgetrocknet wurde.

2. Multifunktionelle Marinade nach Anspruch 1, worin das aromatische Mittel in einer Menge von 20 bis 50 Gew.-%, bezogen auf die Marinade, vorliegt, worin das bräunende Mittel in einer Menge von 1 bis 15 Gew.-%, bezogen auf die Marinade, vorliegt und worin das teilweise hydrierte Fett in einer Menge von 10 bis 60 Gew.-%, bezogen auf die Marinade, vorliegt.

3. Multifunktionelle Marinade nach Anspruch 1, worin das aromatische Mittel aus der Gruppe ausgewählt ist bestehend aus Würze, Kräutern, Gewürzen, Salz, Pfeffer, Zwiebelpulver, Knoblauchpulver, pikantem Pulver und im Handel erhältlichem Aroma.

4. Multifunktionelle Marinade nach Anspruch 1, worin der Füllstoff Maltodextrin ist.

5. Multifunktionelle Marinade nach Anspruch 1, worin das Chromogen in einer Menge von 1 bis 60 Gew.-% in dem bräunenden Mittel vorliegt, worin der Füllstoff in einer Menge von 1 bis 80 Gew.-% in dem bräunenden Mittel vorliegt, worin der Enzym-modifizierte Inhaltsstoff in einer Menge von 40 bis 80 Gew.-% in dem bräunenden Mittel vorliegt und worin das Carbonat in einer Menge von 2 bis 20 Gew.-%, bezogen auf die Enzym-modifizierte, sprühgetrocknete Milchprodukt-Quelle, vorliegt.

6. Multifunktionelle Marinade nach Anspruch 1, worin das Carbonat ein Bicarbonat oder ein Alkalimetall-Hydrogencarbonat ist, und worin die Milchprodukt-Quelle mindestens eine Milchprodukt-Quelle ist, ausgewählt aus der Gruppe bestehend aus fettfreier Trockenmilch und Süssmolke.

7. Multifunktionelle Marinade nach Anspruch 1, worin das teilweise hydrierte Fett einen Fest-Fett-Index von über 65 % aufweist und aus der Gruppe ausgewählt ist, bestehend aus Sojaöl, Baumwollsamenöl und Palmenfett.

8. Multifunktionelle Marinade nach Anspruch 1 in Form eines Trockenpulvers.

9. Multifunktionelle Marinade nach Anspruch 1 in flüssigem Zustand, worin die Flüssigkeit Öl oder Wasser ist.

10. Multifunktionelle Marinade nach Anspruch 9, worin der flüssige Zustand eine Öl-in-Wasser oder Wasser-in-Öl Emulsion ist, und worin die Emulsion Wasser, pflanzliches Öl, teilweise hydriertes Öl, einen Emulgator und ein Fettharz enthält.

11. Multifunktionelle Marinade nach Anspruch 10, worin das Wasser in einer Menge von 5 bis 75 Gew.-% vorliegt, worin das pflanzliche Öl in eine Menge von 25 bis 75 Gew.-% vorliegt, worin das teilweise hydrierte Baumwollsamenöl in eine Menge von 1 bis 10 Gew.-% vorliegt, und worin der Emulgator in eine Menge von 2 bis 10 Gew.-% vorliegt.

12. Multifunktionelle Marinade nach Anspruch 1, weiter umfassend, ein Mittel zur Texturverbesserung in einer ausreichenden Menge, um den Feuchtigkeitsverlust während des Kochvorgangs eines die Marinade enthaltenden Fisch- oder Fleischprodukts zu verringern, das mindestens eine Stärke umfasst, ausgewählt aus der Gruppe bestehend aus oxidierter Stärke und nicht-modifizierter Stärke, und mindestens ein Protein, ausgewählt aus der Gruppe bestehend aus Eiweisspulver, Sojaprotein, und Molkeprotein.

13. Multifunktionelle Marinade nach Anspruch 12, worin das aromatische Mittel in einer Menge von 20 bis 50 Gew.-%, bezogen auf die Marinade, vorliegt, worin das bräunende Mittel in einer Menge von 1 bis 15 Gew.-%, bezogen auf die Marinade, vorliegt, worin das teilweise hydrierte Fett in einer Menge von 10 bis 60 Gew.-%, bezogen auf die Marinade vorliegt, und worin das Mittel zur Texturverbesserung in einer Menge von 30 bis 60 Gew.-%, bezogen auf die Marinade, vorliegt.

14. Multifunktionelle Marinade nach Anspruch 12, worin die oxidierte oder nichtmodifizierte Stärke des Mittels zur Texturverbesserung in einer Menge von 20 bis 80 Gew.-%, bezogen auf das Mittel zur Texturverbesserung, vorliegt, worin das Eiweisspulver des Mittels zur Texturverbesserung in einer Menge bis zu 30 Gew.-%, bezogen auf das Mittel zur Texturverbesserung, vorliegt, oder worin das Molkeprotein des Mittels zur Texturverbesserung in einer Menge bis zu 25 Gew.-%, bezogen auf das Mittel zur Texturverbesserung, vorliegt.

15. Multifunktionelle Marinade nach Anspruch 14, worin das Mittel zur Texturverbesserung weiter umfasst, Sojaprotein, Salz oder Gelatine, wobei das Sojaprotein in einer Menge bis zu 20 Gew.-%, bezogen auf das Mittel zur Texturverbesserung, vorliegt, wobei das Salz in einer Menge bis zu 20 Gew.-%, bezogen auf das Mittel zur Texturverbesserung, vorliegt, und wobei die Gelatine in einer Menge bis zu 40 Gew.-%, bezogen auf das Mittel zur Texturverbesserung, vorliegt.

16. Verfahren zur Aromatisierung eines Fisch- oder Fleischprodukts umfassend:
Inkontaktbringen des Fisch- oder Fleischprodukts mit der multifunktionellen Marinade nach Anspruch 1; und
Kochen des Produkts, um mindestens eines von Aroma, die Textur oder die Färbung des gekochten Produkts zu verbessern.

17. Verfahren aus Anspruch 16, wobei das Fisch- oder Fleischprodukt bei einer Kerntemperatur von zwischen 63 bis 82 °C (145 bis 180°F) durch Grillen, Dampfkochen, Ofenkochen in Konduktions- oder Konvektionsöfen, Frittieren, Braten in der Pfanne, oder durch Kochen des Produkts in der Mikrowelle gekocht wird.

18. Verfahren zur Aromatisierung eines Fisch- oder Fleischprodukts umfassend :
Inkontaktbringen des Fisch- oder Fleischprodukts mit der multifunktionellen Marinade nach Anspruch 9; und
Kochen des Produkts, um mindestens eines von Aroma, Textur oder Färbung des gekochten Produkts zu verbessern.

19. Verfahren nach Anspruch 18, wobei das Fisch- oder Fleischprodukt bei einer Kerntemperatur zwischen 63 bis 82 °C (145 bis 180 °F) durch Grillen, Dampfkochen, Ofenkochen in Konduktions- oder Konvektionsöfen, Frittieren, Braten in der Pfanne, oder durch Kochen des Produkts in der Mikrowelle gekocht wird.

## Revendications

1. Marinade multifonctionnelle comprenant :
au moins un agent aromatisant en une quantité suffisante pour conférer un arôme à un produit consistant en poisson cuit ou viande cuite qui est présent dans la marinade ;
un agent de brunissement en une quantité suffisante pour conférer une couleur brune à un produit consistant en poisson cuit ou viande cuite qui est présent dans la marinade, comprenant un agent chromogène, une charge, et un ingrédient modifié avec une enzyme ; et
une matière grasse partiellement hydrogénée en une quantité suffisante pour améliorer la sensation gustative d'un produit consistant en poisson cuit ou viande cuite qui est présent dans la marinade ;
**caractérisée en ce que** l'agent chromogène est au moins un agent chromogène choisi dans le groupe consistant en caramel colorant, rocou, paprika, curcuma et feuilles de thé ; et l'ingrédient modifié avec une enzyme est un mélange d'un carbonate et d'une source laitière qui a subi un traitement avec une lactase et une protéase et un séchage par pulvérisation.

2. Marinade multifonctionnelle suivant la revendication 1, dans laquelle l'agent aromatisant est présent en une quantité de 20 à 50 % en poids de la marinade, l'agent de brunissement est présent en une quantité de 1 à 15 % en poids de la marinade, la matière grasse partiellement hydrogénée est présente en une quantité de 10 à 60 % en poids de la marinade.

3. Marinade multifonctionnelle suivant la revendication 1, dans lequel l'agent aromatisant est choisi dans le groupe consistant en assaisonnements, fines herbes, épices, sel, poivre, poudre d'oignon, poudre d'ail, poudres aromatiques et agents aromatisants disponibles dans le commerce.

4. Marinade multifonctionnelle suivant la revendication 1, dans laquelle la charge est la maltodextrine.

5. Marinade suivant la revendication 1, dans laquelle l'agent chromogène est présent dans l'agent de brunissement en une quantité de 1 à 60 % en poids, la charge est présente dans l'agent de brunissement en une quantité de 1 à 80 % en poids, et l'ingrédient modifié avec une enzyme est présent dans l'agent de brunissement en une quantité de 40 à 80 % en poids, et le carbonate est présent en une quantité de 2 à 20 % en poids de la source laitière modifiée avec une enzyme, séchée par pulvérisation.

6. Marinade multifonctionnelle suivant la revendication 1, dans laquelle le carbonate est un bicarbonate ou un carbonate acide de métal alcalin, et la source laitière est au moins une source laitière choisie dans le groupe consistant en le lait écrémé sec et le lactosérum doux.

7. Marinade multifonctionnelle suivant la revendication 1, dans laquelle la matière grasse partiellement hydrogénée a un indice de matière grasse solide supérieur à 65 % et est choisie dans le groupe consistant en huile de soja, huile de graines de cotonnier et matière grasse de palme.

8. Marinade multifonctionnelle suivant la revendication 1, sous forme d'une poudre sèche.

9. Marinade multifonctionnelle suivant la revendication 1, sous forme liquide, dans laquelle le liquide consiste en huile ou en eau.

10. Marinade multifonctionnelle suivant la revendication 9, dans laquelle la forme liquide est une émulsion huile-dans-eau ou eau-dans-huile, l'émulsion comprenant de l'eau, une huile végétale, une huile partiellement hydrogénée, un émulsionnant et une oléorésine.

11. Marinade multifonctionnelle suivant la revendication 10, dans laquelle l'eau est présente en une quantité de 5 à 75 % en poids, l'huile végétale est présente en une quantité de 25 à 75 % en poids, l'huile de graines de cotonnier partiellement hydrogénée est présente en une quantité de 1 à 10 % en poids et l'émulsionnant est présent en une quantité de 2 à 10 % en poids.

12. Marinade multifonctionnelle suivant la revendication 1, comprenant en outre un agent améliorant la texture en une quantité suffisante pour réduire la perte d'humidité au cours de la cuisson d'un produit consistant en poisson ou viande qui contient la marinade, comprenant au moins un amidon choisi dans le groupe consistant en amidon oxydé et amidon non modifié, et au moins une protéine choisie dans le groupe consistant en poudre de blanc d'oeuf, protéine de soja et protéine du petit lait.

13. Marinade multifonctionnelle suivant la revendication 12, dans laquelle l'agent aromatisant est présent en une quantité de 20 à 50 % en poids de la marinade, l'agent de brunissement est présent en une quantité de 1 à 15 % en poids de la marinade, la matière grasse partiellement hydrogénée est présente en une quantité de 10 à 60 % en poids de la marinade et l'agent améliorant la texture est présent en une quantité de 30 à 60 % en poids de la marinade.

14. Marinade multifonctionnelle suivant la revendication 12, dans laquelle l'amidon oxydé ou non modifié de l'agent améliorant la texture est présent en une quantité de 20 à 80 % en poids de l'agent améliorant la texture, la poudre de blanc d'oeuf de l'agent améliorant la texture est présente en une quantité allant jusqu'à 30 % en poids de l'agent améliorant la texture, ou la protéine du petit lait de l'agent améliorant la texture est présente en une quantité allant jusqu'à 25 % en poids de l'agent améliorant la texture.

15. Marinade multifonctionnelle suivant la revendication 14, dans laquelle l'agent améliorant la texture comprend en outre de la protéine de soja, du sel ou de la gélatine ; la protéine de soja étant présente en une quantité allant jusqu'à 20 % en poids de l'agent améliorant la texture, le sel étant présent en une quantité allant jusqu'à 20 % en poids de l'agent améliorant la texture, et la gélatine étant présente en une quantité allant jusqu'à 40 % en poids de l'agent améliorant la texture.

16. Procédé pour aromatiser un produit consistant en poisson ou viande, comprenant :
la mise en contact du produit consistant en poisson ou viande avec la marinade multifonctionnelle suivant la revendication 1 ; et
la cuisson du produit pour accroître au moins l'une des caractéristiques consistant en arôme, texture et couleur du produit cuit.

17. Procédé suivant la revendication 16, dans lequel le produit consistant en poisson ou viande est cuit à une température de coeur comprise dans l'intervalle de 63°C à 82°C (145° à 180°F) par cuisson sur le grill, cuisson à la vapeur, cuisson au four dans des fours à conduction ou convection, cuisson en friture, cuisson à la poêle ou cuisson par micro-ondes du produit.

18. Procédé pour aromatiser un produit consistant en poisson ou viande, comprenant :
la mise en contact du produit consistant en poisson ou viande avec la marinade multifonctionnelle suivant la revendication 9 ; et
la cuisson du produit consistant en poisson ou viande pour accroître au moins l'une des caractéristiques consistant en saveur, texture et couleur du produit cuit.

19. Procédé suivant la revendication 18, dans lequel le produit consistant en poisson ou viande est cuit à une température de coeur comprise dans l'intervalle de 63°C à 82°C (145° à 180°F) par cuisson sur le grill, cuisson à la vapeur, cuisson au four dans des fours à conduction ou convection, cuisson en friture, cuisson à la poêle ou cuisson par micro-ondes du produit.
